(19) Europäisches Patentamt
European Patent Office
Office européen des brevets

(11) **EP 4 597 434 A1**

(12) **EUROPEAN PATENT APPLICATION**
published in accordance with Art. 153(4) EPC

(43) Date of publication:
06.08.2025 Bulletin 2025/32

(21) Application number: 23870131.2

(22) Date of filing: 30.08.2023

(51) International Patent Classification (IPC):
*G06T 17/20* (2006.01)

(52) Cooperative Patent Classification (CPC):
G06T 15/10; G06T 17/20

(86) International application number:
PCT/CN2023/115899

(87) International publication number:
WO 2024/066891 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 CN 202211212199

(71) Applicant: Hefei Meyer Optoelectronic
Technology Inc.
Hefei, Anhui 230088 (CN)

(72) Inventors:
• WANG, Yu
  Hefei, Anhui 230088 (CN)
• SONG, Chengqian
  Hefei, Anhui 230088 (CN)

(74) Representative: Lewis Silkin LLP
Arbor
255 Blackfriars Road
London SE1 9AX (GB)

(54) **CURVED-SURFACE FUSION METHOD AND APPARATUS, AND MEDICAL IMAGING DEVICE**

(57) A curved-surface fusion method and apparatus, and a medical imaging device, which relate to the technical field of medical treatment. The curved-surface fusion method comprises: calculating a first TSDF value of each corner point corresponding to a curved surface to be fused; acquiring a second TSDF value of each corner point corresponding to a target curved surface; according to the first TSDF value and the second TSDF value, determining a third TSDF value of each corner point corresponding to a fused curved surface; according to the third TSDF value and corner point coordinates, determining vertex coordinates of a triangular mesh of the fused curved surface and a topological structure of the triangular mesh; and determining the fused curved surface according to the vertex coordinates of the triangular mesh of the fused curved surface and the topological structure of the triangular mesh.

Calculating a first TSDF value of each corner point corresponding to a to-be-fused curved surface — S1

Obtaining a second TSDF value of each corner point corresponding to a target curved surface — S2

Determining a third TSDF value of each corner point corresponding to a fused curved surface based on the first TSDF value and the second TSDF value — S3

Determining coordinates of a vertex of a triangular mesh of the fused curved surface and a topological structure of the triangular mesh based on the third TSDF value of the corner point and coordinates of the corner point — S4

Determining the fused curved surface based on the coordinates of the vertex of the triangular mesh of the fused curved surface and the topological structure of the triangular mesh — S5

FIG. 1

**EP 4 597 434 A1**

## Description

### CROSS-REFERENCE TO RELATED APPLICATION

This application claims priority to Chinese patent application No. 202211212199.5, titled "CURVED-SURFACE FUSION METHOD AND DEVICE AND MEDICAL IMAGING APPARATUS" and filed on September 30, 2022, the entire contents of which are incorporated herein by reference.

### FIELD

The present disclosure relates to the field of medical technologies, and more particularly, to a curved-surface fusion method and device and a medical imaging apparatus.

### BACKGROUND

An intraoral scanner needs to perform reconstruction, registration, and fusion while scanning, and display a fused curved surface in real time. Conventional methods require registration and fusion before generating a curved surface, which results in either insufficient accuracy or inadequate speed.

### SUMMARY

A first objective of the present disclosure is to provide a curved-surface fusion method that can effectively fuse a to-be-fused curved surface with a target curved surface without requiring separate curved surface reconstruction, significantly reducing a computational load.
A second objective of the present disclosure is to provide a curved-surface fusion device.
A third objective of the present disclosure is to provide a medical imaging apparatus.
To achieve the above objectives, a curved-surface fusion method is provided according to an embodiment in a first aspect of the present disclosure. The curved-surface fusion method includes: calculating a first TSDF value of each corner point corresponding to a to-be-fused curved surface; obtaining a second TSDF value of each corner point corresponding to a target curved surface; determining a third TSDF value of each corner point corresponding to a fused curved surface based on the first TSDF value and the second TSDF value; determining coordinates of a vertex of a triangular mesh of the fused curved surface and a topological structure of the triangular mesh based on the third TSDF value of the corner point and coordinates of the corner point; and determining the fused curved surface based on the coordinates of the vertex of the triangular mesh of the fused curved surface and the topological structure of the triangular mesh.
In addition, the curved-surface fusion method according to the above embodiment of the present disclosure can further have the following additional technical features.
According to an embodiment of the present disclosure, the calculating the first TSDF value of each corner point corresponding to the to-be-fused curved surface includes: determining an envelope mesh group of the to-be-fused curved surface, and calculating, for each corner point in the envelope mesh group, a minimum distance from the corner point to all triangular meshes on the to-be-fused curved surface; and determining the minimum distance as a TSDF distance in the first TSDF value of each corner point corresponding to the to-be-fused curved surface.
According to an embodiment of the present disclosure, the determining the envelope mesh group of the to-be-fused curved surface, and calculating, for each corner point in the envelope mesh group, the minimum distance from the corner point to all the triangular meshes on the to-be-fused curved surface includes: determining, for all the triangular meshes on the to-be-fused curved surface, an envelope mesh group that envelopes all the triangular meshes, the determined envelope mesh group being denoted as a first envelope mesh group, the first envelope mesh group being the envelope mesh group of the to-be-fused curved surface; determining, for each corner point of each cube in the first envelope mesh group, projection points of the corner point to all the triangular meshes on the to-be-fused curved surface, and calculating a first distance from the corner point to each of the projection points of the corner point; and determining a minimum distance among the first distances of each corner point as the minimum distance from the corner point to all the triangular meshes on the to-be-fused curved surface; or determining, for each triangular mesh on the to-be-fused curved surface, an envelope mesh group that envelopes the triangular mesh, the determined envelope mesh group being denoted as a second envelope mesh group, all second envelope mesh groups constituting the envelope mesh group of the to-be-fused curved surface; determining, for each corner point of each cube in each second envelope mesh group, projection points of the corner point to corresponding triangular meshes, and calculating a first distance from the corner point to each of the projection points of the corner point; and determining a minimum distance among the first distances corresponding to a same corner point as a minimum distance from the same corner point to all the triangular meshes on the to-be-fused curved surface, each of the projection points used to calculate the first distance falling within a corresponding triangular mesh.

According to an embodiment of the present disclosure, a way of determining the projection points includes at least one of the following: way 1: obtaining, for each corner point, projection points of the corner point to all the triangular meshes on the to-be-fused curved surface using a center-of-gravity method and a vertical vector method; way 2: determining, for each mesh corresponding to the to-be-fused curved surface, an intersection of a line connecting centers of opposite faces of the mesh with a corresponding one of all the triangular meshes on the to-be-fused curved surface, and determining the intersection as a projection point of eight corner points of the mesh to the corresponding one of all the triangular meshes on the to-be-fused curved surface; and way 3: determining, for each triangular mesh on the to-be-fused curved surface, an intersection of a mesh face of an envelope mesh group of the triangular mesh with the triangular mesh, and determining the intersection as a projection point of eight corner points of each mesh in the envelope mesh group of the triangular mesh to the triangular mesh.

According to an embodiment of the present disclosure, when a corner point that has no projection point to all the triangular meshes on the to-be-fused curved surface exists, a projection point of an adjacent corner point to the corner point is determined as the projection point of the corner point.

According to an embodiment of the present disclosure, the determining the third TSDF value of each corner point corresponding to the fused curved surface based on the first TSDF value and the second TSDF value includes: determining an envelope mesh group of the target curved surface, the determined envelope mesh group of the target curved surface being denoted as a third envelope mesh group, and an envelope mesh group of the to-be-fused curved surface being denoted as a fourth envelope mesh group; obtaining, for each corner point of a common portion of the third envelope mesh group and the fourth envelope mesh group, a TSDF distance in the third TSDF value of the corner point based on a TSDF distance in the first TSDF value of the corner point and a TSDF distance and a TSDF weight in the second TSDF value of the corner point, and obtaining a TSDF weight in the third TSDF value of the corner point based on the TSDF distance in the first TSDF value of the corner point and a TSDF weight; and determining, for each corner point of an added portion of the fourth envelope mesh group relative to the third envelope mesh group, the first TSDF value of the corner point as the TSDF distance in the third TSDF value of the corner point, and obtaining the TSDF weight in the third TSDF value of the corner point as a predetermined value.

According to an embodiment of the present disclosure, the obtaining the TSDF weight in the third TSDF value based on the TSDF distance in the first TSDF value and the TSDF weight includes: obtaining the TSDF weight in the third TSDF value based on the TSDF weight in the second TSDF value when the TSDF distance in the first TSDF value is smaller than a predetermined truncation distance; and determining the TSDF weight in the second TSDF value as the TSDF weight in the third TSDF value when the TSDF distance in the first TSDF value is greater than or equal to the predetermined truncation distance.

According to an embodiment of the present disclosure, the obtaining the TSDF distance in the third TSDF value based on the TSDF distance in the first TSDF value and the TSDF distance and the TSDF weight in the second TSDF value includes: calculating a product of the TSDF distance and the TSDF weight in the second TSDF value to obtain a first product; calculating a product of the TSDF distance in the first TSDF value and a unit threshold of TSDF to obtain a second product; calculating a sum of the first product and the second product to obtain a first sum; calculating a sum of the TSDF weight in the second TSDF value and the unit threshold to obtain a second sum; and calculating a ratio of the first sum to the second sum to obtain the TSDF distance in the third TSDF value. The obtaining the TSDF weight in the third TSDF value based on the TSDF weight in the second TSDF value includes: determining the second sum as the TSDF weight in the third TSDF value.

According to an embodiment of the present disclosure, the determining the coordinates of the vertex of the triangular mesh of the fused curved surface and the topological structure of the triangular mesh based on the third TSDF value of the corner point and the coordinates of the corner point includes: determining the coordinates of the vertex of the triangular mesh of the fused curved surface based on the coordinates of the corner point and the TSDF distance in the third TSDF value; and determining an nMC value corresponding to a cubic mesh based on the TSDF distance in the third TSDF value, and determining the topological structure of the triangular mesh of the fused curved surface based on the nMC value and the coordinates of the vertex of the triangular mesh.

With the curved-surface fusion method according to the embodiments of the present disclosure, the first TSDF value of the to-be-fused curved surface is calculated using a TSDF algorithm. The second TSDF value of the fused surface is obtained. The third TSDF value of each corner point corresponding to the fused curved surface is calculated based on the first TSDF value and the second TSDF value. By replacing voxel positions with corner point positions, the computational load for the curved-surface fusion is reduced. In addition, the coordinates of the vertex of the triangular mesh of the fused curved surface and the topological structure of the triangular mesh are determined based on the third TSDF value and the coordinates of the corner point, in such a manner that the fused curved surface is determined. A calculation process of the curved-surface fusion is a process of determining the vertex of the triangular mesh of the fused curved surface and the topological structure of the triangular mesh, which is equivalent to combining the curved-surface fusion with a curved-surface reconstruction without reconstructing the curved surface separately, reducing the computational load.

To achieve the above objectives, a curved-surface fusion device is provided according to an embodiment in a second aspect of the present disclosure. The curved-surface fusion device includes a memory, a processor, and a computer program stored on the memory. The computer program, when executed by the processor, implements the curved-surface fusion method described above.

To achieve the above objectives, a medical imaging apparatus is provided according to an embodiment in a third aspect of the present disclosure. The medical imaging apparatus includes the curved-surface fusion device described above.

Additional aspects and advantages of the present disclosure will be provided at least in part in the following description, or will become apparent at least in part from the following description, or can be learned from practicing of the present disclosure.

## BRIEF DESCRIPTION OF THE DRAWINGS

FIG. 1 is a flowchart of a curved-surface fusion method according to an embodiment of the present disclosure.

FIG. 2 is a flowchart illustrating calculating a first TSDF value of each corner point corresponding to a to-be-fused curved surface according to an embodiment of the present disclosure.

FIG. 3(a) is a flowchart illustrating calculating a minimum distance from a corner point to all triangular meshes on a to-be-fused curved surface according to an embodiment of the present disclosure.

FIG. 3(b) is a flowchart illustrating calculating a minimum distance from a corner point to all triangular meshes on a to-be-fused curved surface according to another embodiment of the present disclosure.

FIG. 4(a) is a schematic diagram showing calculating a projection point of a triangular mesh according to an embodiment of the present disclosure.

FIG. 4(b) is a schematic diagram showing calculating a projection point of a triangular mesh according to another embodiment of the present disclosure.

FIG. 5 is a flowchart illustrating determining a third TSDF value of each corner point corresponding to a fused curved surface according to an embodiment of the present disclosure.

FIG. 6 is a flowchart illustrating calculating a TSDF distance in a third TSDF value according to an embodiment of the present disclosure.

FIG. 7 is a flowchart illustrating calculating coordinates of a vertex of a triangular mesh of a fused curved surface and a topological structure of the triangular mesh according to an embodiment of the present disclosure.

FIG. 8 is a schematic diagram showing corresponding identifiers of edges and corners of a mesh block according to an embodiment of the present disclosure.

FIG. 9 is a schematic diagram showing a structure of a curved-surface fusion device according to an embodiment of the present disclosure.

FIG. 10 is a schematic diagram showing a structure of a medical imaging apparatus according to an embodiment of the present disclosure.

## DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

A curved-surface fusion method and device and a medical imaging apparatus according to the embodiments of the present disclosure will be described in detail below in conjunction with the accompanying drawings of the specification and specific embodiments.

In order to facilitate understanding of application scenarios of the present disclosure, an example is provided. During scanning and imaging of a three-dimensional object, such as scanning and imaging performed by an intraoral digital impression machine on teeth in the mouth, a curved surface generated from initial scanning is used as a target curved surface, and a curved surface generated from subsequent scanning is used as a to-be-registered-and-fused curved surface. By registering and fusing the to-be-registered-and-fused curved surface to the target curved surface, a new target curved surface can be generated. A subsequently scanned curved surface is then fused and registered onto the new target curved surface. Through multiple rounds of registration and fusion, a larger curved surface is generated. In this way, scanning and imaging of the three-dimensional object can be completed. The curved-surface fusion method according to the embodiments of the present disclosure can be applied to the above fusion process.

It should be noted that the specific fields in which the embodiments of the present disclosure can be applied are not limited to the above field of scanning and imaging of the three-dimensional object. In other fields and when corresponding conditions for the fusion process can be satisfied, the curved-surface fusion method according to the embodiments of the present disclosure can be used to fuse any two curved surfaces.

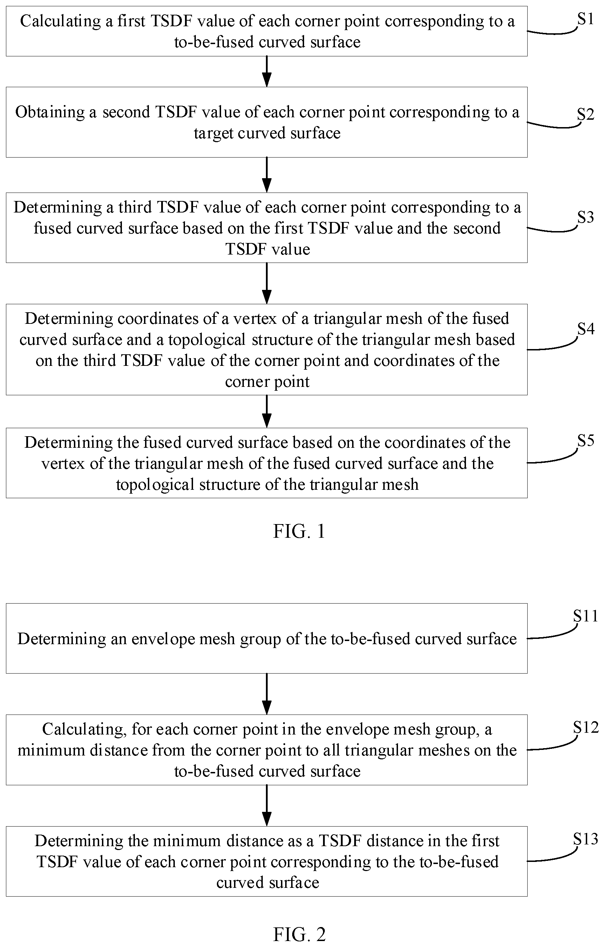

FIG. 1 is a flowchart of a curved-surface fusion method according to an embodiment of the present disclosure.

In an embodiment of the present disclosure, as illustrated in FIG. 1, the curved-surface fusion method includes operations at blocks.

At S1, a first TSDF value of each corner point corresponding to a to-be-fused curved surface is calculated.

Specifically, in the present disclosure, a Truncated Signed Distance Function (TSDF) method is adopted for processing curved surfaces scanned by a camera (e.g., a medical imaging apparatus such as an intraoral digital impression machine). With the TSDF method, a space is divided into equilateral, infinitely extendable mesh blocks (i.e., a cube). A TSDF value of a corner point includes a TSDF distance, which is a value of a corresponding truncated distance function, and a TSDF weight, which is a corresponding weight that can indicate a sampling quality of a corresponding corner point.

After the TSDF value of each corner point of a curved surface is calculated, a position of a triangular mesh of the curved surface can be determined using linear interpolation. The position of the triangular mesh can be represented by coordinates of a vertex of the triangular mesh and a topological structure of the triangular mesh.

If the to-be-fused curved surface is a 1-st curved surface, the to-be-fused curved surface is determined as a target curved surface. A Marching Cube (MC) mesh division of the target curved surface serves as a division of a base model mesh block and is extended to form a base mesh. The first TSDF value of each corner point of all cubic meshes corresponding to the target curved surface can be calculated. If the to-be-fused curved surface is not the 1-st curved surface, the to-be-fused curved surface is processed based on the above base model mesh block to obtain the first TSDF value of each corner point of all cubes corresponding to the to-be-fused curved surface.

It should be noted that, all cubic meshes corresponding to a curved surface, i.e., an envelope mesh group of the curved surface, are composed of all cubes in the base mesh that envelop the curved surface, or all the cubic meshes corresponding to the curved surface, i.e., the envelope mesh group of the curved surface, are composed of envelope mesh groups of individual triangular meshes in the base mesh. The individual triangular meshes refer to individual triangular meshes in the curved surface. The envelope mesh group of the triangular mesh is composed of all cubes in the base mesh that envelop the triangular mesh.

In addition, it should be noted that the target curved surface is the fused curved surface, which is reconstructed based on an MC algorithm, while the to-be-fused curved surface is composed of triangular meshes, which is not necessarily reconstructed based on the MC algorithm.

In an embodiment of the present disclosure, as illustrated in FIG. 2, calculating the first TSDF value of each corner point corresponding to the to-be-fused curved surface may include operations at blocks.

At S11, an envelope mesh group of the to-be-fused curved surface is determined.

Specifically, enveloping may mean determining a minimum range containing a target from each of three mutually perpendicular normal directions of a surface of a cube. The minimum ranges in the three normal directions determine an envelope mesh group corresponding to the target. The determined ranges are composed of cubes of an integer number.

In an embodiment, prior to performing a calculation on each corner point in the envelope mesh group, the to-be-fused curved surface is enveloped using an entire spatial mesh group TotalGrid to obtain a first envelope mesh group CurSurGrid (the first envelope mesh group CurSurGrid takes part of the entire spatial mesh group TotalGrid) of to-be-fused curved surface. The first envelope mesh group CurSurGrid may serve as the envelope mesh group of the to-be-fused curved surface. Therefore, the calculation can be performed only on each corner point in the first envelope mesh group CurSurGrid of the to-be-fused curved surface, which can reduce a subsequent computational load.

In another embodiment, the entire spatial mesh group TotalGrid may also be used to envelope each triangular mesh of the to-be-fused curved surface to obtain a second envelope mesh group TriGrid (the second envelope mesh group TriGrid takes part of the entire spatial mesh group TotalGrid) corresponding to each triangular mesh of the to-be-fused curved surface. The second envelope mesh group TriGrid corresponding to each triangular mesh on the to-be-fused curved surface forms the envelope mesh group of the to-be-fused curved surface. Therefore, a quantity of corner points to be calculated can be further reduced, reducing the subsequent computational load.

All triangular meshes of the to-be-fused curved surface can be computed in parallel. This process can be accelerated using Compute Unified Device Architecture (CUDA), which is a parallel computing platform and programming model that leverages processing power of a Graphics Processing Unit (GPU) to enhance computational performance.

At S12, for each corner point in the envelope mesh group, a minimum distance from the corner point to all triangular meshes on the to-be-fused curved surface is calculated.

Specifically, for each corner point in the envelope mesh group of the to-be-fused curved surface, a projection method can be used to calculate the minimum distance from the corner point to all the triangular meshes on the to-be-fused curved surface.

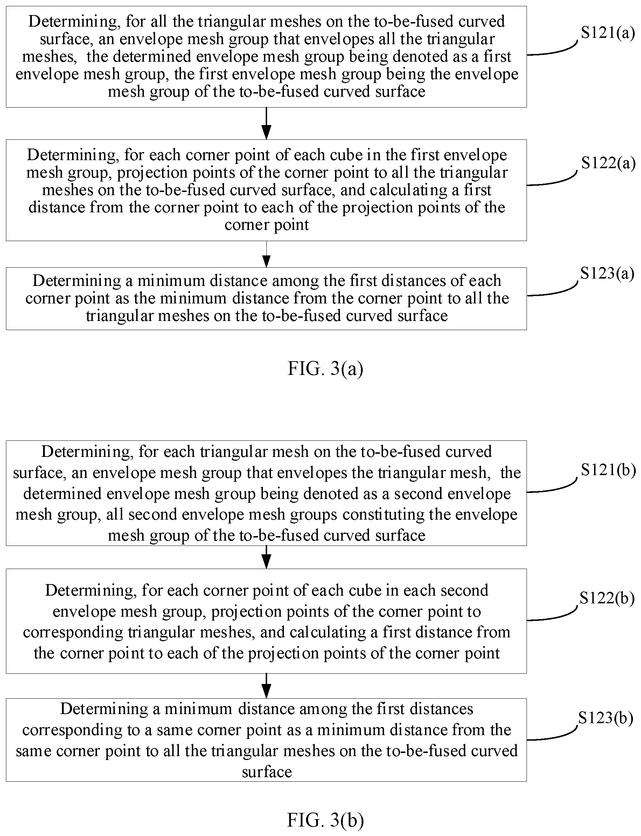

In an embodiment of the present disclosure, as illustrated in FIG. 3(a), determining the envelope mesh group of the to-be-fused curved surface, and calculating, for each corner point in the envelope mesh group, the minimum distance from the corner point to all the triangular meshes on the to-be-fused curved surface may include operations at blocks.

At S121(a), for all the triangular meshes on the to-be-fused curved surface, an envelope mesh group that envelopes all the triangular meshes is determined, and the determined envelope mesh group is denoted as a first envelope mesh group. The first envelope mesh group is the envelope mesh group of the to-be-fused curved surface.

At S122(a), for each corner point of each cube in the first envelope mesh group, projection points of the corner point to all the triangular meshes on the to-be-fused curved surface are determined, and a first distance from the corner point to each of the projection points of the corner point is calculated. Each of the projection points used to calculate the first distance falls within a corresponding triangular mesh.

At S123(a), a minimum distance among the first distances of each corner point is determined as the minimum distance from the corner point to all the triangular meshes on the to-be-fused curved surface.

The first envelope mesh group includes several cubes. Each cube contains eight corner points. Through calculating projection points of each corner point of the cube, projection points of all corner points in the first envelope mesh group are calculated. The first distance from each corner point to a respective projection point is calculated. In this way, the minimum distance among the first distances of each corner point can be calculated, the calculated minimum distance is the minimum distance from the corner point to all the triangular meshes on the to-be-fused curved surface.

In another embodiment, as illustrated in FIG. 3(b), determining the envelope mesh group of the to-be-fused curved surface, and calculating, for each corner point in the envelope mesh group, the minimum distance from the corner point to all the triangular meshes on the to-be-fused curved surface may include operations at blocks.

At S121(b), for each triangular mesh on the to-be-fused curved surface, an envelope mesh group that envelopes the triangular mesh is determined, and the determined envelope mesh group is denoted as a second envelope mesh group. All second envelope mesh groups constitute the envelope mesh group of the to-be-fused curved surface.

At S122(b), for each corner point of each cube in each second envelope mesh group, projection points of the corner point to corresponding triangular meshes are determined, and a first distance from the corner point to each of the projection points of the corner point is calculated.

At S123(b), a minimum distance among the first distances corresponding to a same corner point is determined as a minimum distance from the same corner point to all the triangular meshes on the to-be-fused curved surface. Each of the projection points used to calculate the first distance falls within a corresponding triangular mesh. The corresponding triangular meshes refer to triangular meshes enveloped by the second envelope mesh group.

It should be noted that corner points in the mesh group corresponding to each triangular mesh correspond to this triangle, and each corner point may correspond to one or more triangular meshes.

Specifically, the corner point of each cube in the second envelope mesh group corresponding to each triangular mesh is the corner point of the cube on the second envelope mesh group TriGrid. Projections points of the corner point to all the triangular meshes on the to-be-fused curved surface are determined.

The to-be-fused curved surface contains a plurality of triangular meshes. Each triangular mesh corresponds to one second envelope mesh group. All second envelope mesh groups obtained here form envelope mesh groups of the to-be-fused curved surface. For each corner point in each second envelope mesh group, the first distance from the corner point to the projection point of the triangular mesh enveloped by the second envelope mesh group is calculated, i.e., the first distance of each corner point of the cube in the envelope mesh group of the to-be-fused curved surface is calculated. The minimum distance among the first distances of the same corner point is the minimum distance from the same corner point to all the triangular meshes on the to-be-fused curved surface, i.e., a distance value in the TSDF value corresponding to each corner point in the second envelope mesh group is calculated.

Specifically, one cube contains eight corner points. A projection to the triangular mesh is performed for each corner point. Whether the projection point falls within the triangular mesh is determined. If the projection point falls within the triangular mesh, the projection point is calculated. If the projection point does not fall within the triangular mesh, there is no corresponding projection point. Through performing a determination before making a calculation, the computational load can be reduced, which accelerates a computation speed.

Further, specifically, one corner point may have corresponding projection points in a plurality of triangular meshes. The first distance from the corner point to each of the corresponding projection points of the corner point is calculated. A shortest distance among all first distances is the minimum distance from the corner point to all the triangular meshes on the to-be-fused curved surface.

It should be noted that, since computation for individual corner points can be performed in parallel, computation for individual cubes can also be performed in parallel. Such a process can be accelerated using CUDA.

In an embodiment of the present disclosure, a way of determining the projection points at block S121 may include at least one of the following three ways.

Way 1: for each corner point, projection points of the corner point to all the triangular meshes on the to-be-fused curved surface are obtained using a center-of-gravity method and a vertical vector method.

Specifically, assume that three vertices of a triangle (i.e., the triangular mesh) are A, B, and C, two vectors starting from point A in a plane are $v1 = B-A$ and $v2 = C - A$. According to the center-of-gravity method, any point PP in the triangle can be described as:

$$PP = A + t1 \times v1 + t2 \times v2 \qquad (1)$$

In equation (1), t1 and t2 represent vector coefficients. When three conditions $0 \le t1 \le 1$, $0 \le t2 \le 1$, and t1+t2<1 are satisfied simultaneously, PP is in the triangle ABC. If the projection point of point P is PP, the vector $v = P - PP$ is perpendicular to the triangle ABC. According to the property of the vertical vector method that a dot product of two perpendicular vectors is zero, it can be obtained that:

$$v \cdot v1 = 0, \text{ and } v \cdot v2 = 0.$$

From the above equations, it can be derived that:

$$t1 = \frac{a1 \times c2 - a2 \times c1}{b1 \times c2 - c1 \times c1}, \text{ and } t2 = \frac{a1 \times c1 - a2 \times b1}{c1 \times c1 - b1 \times c2}$$

In the above equations, $a1 = v3 \cdot v1$, $b1 = v1 \cdot v1$ $c1 = v2 \cdot v1$, $a2 = v3 \cdot v2$, $c2 = v2 \cdot v2$, and vector $v3 = P - A$.

If the calculated t1 and t2 satisfy the above conditions, it indicates that the projection point of the corner point is in the triangular mesh. Coordinates of the projection point of the corner point can calculated using the equation (1) to obtain the first distance from the corner point to the projection point of the corner point. Therefore, the minimum distance among all the first distances can be obtained.

Way 2: for each mesh (i.e., cube) corresponding to the to-be-fused curved surface, an intersection of a line connecting centers of opposite faces of the mesh with a corresponding one of all the triangular meshes on the to-be-fused curved surface is determined, and the intersection is determined as a projection point of eight corner points of the mesh to the corresponding one of all the triangular meshes on the to-be-fused curved surface.

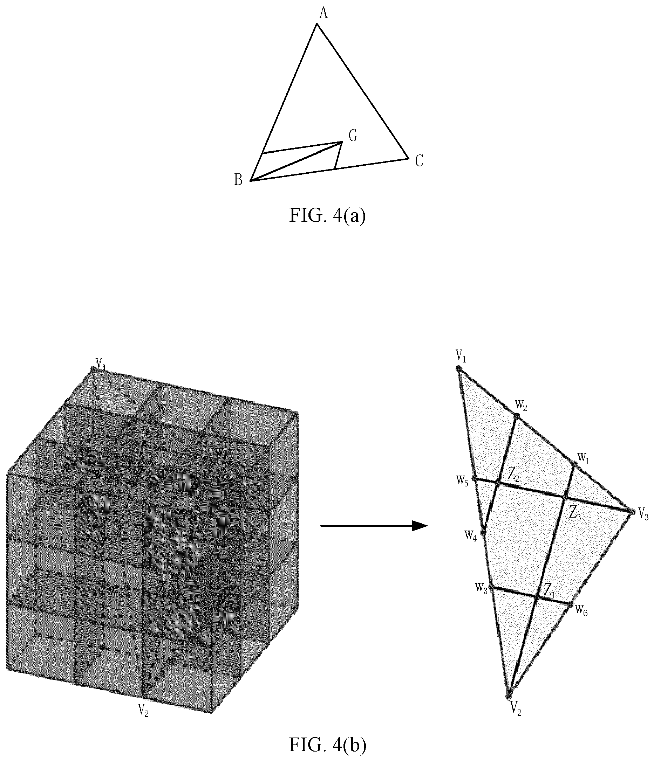

Specifically, as illustrated in FIG. 4(a), for any point G on any triangle ABC on the curved surface:

$$G_x = B_x + t_1 \times CB_x + t_2 \times AB_x$$

$$G_y = B_y + t_1 \times CB_y + t_2 \times AB_y$$

$$G_z = B_z + t_1 \times CB_z + t_2 \times AB_z$$

$$CB_x = C_x - B_x \qquad AB_x = A_x - B_x$$

In the above equations,

$$CB_y = C_y - B_y \text{ and } AB_y = A_y - B_y.$$

$$CB_z = C_z - B_z \qquad AB_z = A_z - B_z$$

A superposition calculation is performed. $G_x$ represents a magnitude in direction X on plane XY. It is known that $G_x$ =((nNumx+0.5)*side length of each mesh). $G_y$ represents a magnitude in direction Y on the plane XY. $G_y$ =((nNumy+0.5) *side length of each mesh). nNumx and nNumy are sequence numbers of the corner points from an origin in their respective directions. According to equations of $G_x$ and $G_y$ the following can be solved:

$$t_1 = \frac{w_1 \times AB_y - w_2 * AB_x}{w_3}$$

$$t_2 = \frac{w_2 \times CB_x - w_1 * CB_y}{w_3},$$

where

$w_1 = B_x - G_x$

$w_2 = B_y - G_y$

$w_3 = AB_x \times CB_y - AB_y \times CB_x$

$G_z$ can be solved based on the above equations.

Similarly, when $G_x$ and $G_z$ are known, $G_y$ can be solved; and when $G_z$ and $G_y$ are known, $G_x$ can be solved.

Results of the calculation are intersections of center points of planes XY, YZ, and ZX within the mesh moving along Z-axis, X-axis, and Y-axis to the triangular mesh of to-be-fused curved surface. In this way, for the eight corner points within one mesh, the projection point only needs to be calculated once. A value of the calculated projection point is assigned to these eight corner points, thereby reducing the computational load.

It should be noted that the above way must also satisfy the three conditions 0≤t1 ≤1, 0≤t2≤1, and t1+t2<1 simultaneously. Only when these three conditions are satisfied, the projection point lies within the triangular mesh and is considered a valid projection point; otherwise, the projection point lies outside the triangular mesh and is considered an invalid projection point.

Way 3: for each triangular mesh on the to-be-fused curved surface, an intersection of a mesh face of an envelope mesh group (i.e., the second envelope mesh group) of the triangular mesh with the triangular mesh is determined, and the intersection is determined as a projection point of eight corner points of each cube in the envelope mesh group of the triangular mesh to the triangular mesh. The mesh face of the envelope mesh group refers to a face of each cube in the envelope mesh group.

Specifically, an intersection line between each triangular mesh on the to-be-fused curved surface and the mesh face of the envelope mesh group of the triangular mesh is obtained. As illustrated in FIG. 4(b), coordinates of three vertices of each triangular mesh on the to-be-fused curved surface are v1(x1, y1, z1), v2(x2, y2, z2), and v3(x3, y3, z3), from which the intersection w(wx, wy, wz) on the edges can be determined. A specific calculation method is as follows.

Each face of the second envelope mesh group TriGrid of each triangular mesh envelope of the to-be-fused curved surface is calculated. Taking face S(sx=x) as an example, the intersection w is:

$$\begin{cases} wx = x \\ wy = y1 + (x - x1)\dfrac{y2 - y1}{x2 - x1} \\ wz = z1 + (x - x1)\dfrac{z2 - z1}{x2 - x1} \end{cases}$$

$$\begin{cases} wx = x \\ wy = y1 + (x - x1)\dfrac{y3 - y1}{x3 - x1} \\ wz = z1 + (x - x1)\dfrac{z3 - z1}{x3 - x1} \end{cases}$$

$$\begin{cases} wx = x \\ wy = y2 + (x - x1)\dfrac{y3 - y2}{x3 - x2} \\ wz = z2 + (x - x1)\dfrac{z3 - z2}{x3 - x2} \end{cases}$$

A point that simultaneously satisfies y1≤wy≤y2 and z1≤wz≤z2 is considered as valid point w; otherwise, the point is considered as an invalid point and not saved.

As illustrated in FIG. 4(b), for each face along the X-axis, resulting line segments w2-w4(x=wx1) and w1-w7 (in the figure, w7 coincides with v2, and x=wx2) are calculated. For each face along the Y-axis, resulting line segments w3-w6(y=wy1) and w5-w8 (in the figure, w8 coincides with v3, and y=wy2) are calculated. For each face along the Z-axis, there are no valid points.

After the intersection line between each triangular mesh on the to-be-fused curved surface and the mesh face of the envelope mesh group of the triangular mesh is obtained, intersection z of line segments composed of points w is calculated as follows.

Taking the line segment L1(L1x=wx) of each face along the X-axis and the result L2((x1, y1, z1)-(x2, y2, z2)) calculated for each face along the Y-axis as an example, the intersection on the line segment L1(L1x=wx) and the result L2((x1, y1, z1)-(x2, y2, z2)) are calculated as follows:

$$\begin{cases} zx = wx \\ zy = y1 + (wx - x1)\dfrac{y2 - y1}{x2 - x1} \\ zz = z1 + (wx - x1)\dfrac{z2 - z1}{x2 - x1} \end{cases}$$

As an example, in FIG. 4(b), intersections Z1, Z2, and Z3 are obtained. These points represent the projection points of the eight corner points of each mesh in the envelope mesh group, i.e., the second envelope mesh group TriGrid, of the to-be-fused curved surface to the triangular mesh.

At S13, the minimum distance is determined as a TSDF distance in the first TSDF value of each corner point corresponding to the to-be-fused curved surface.

Specifically, with any one of the projection methods according to the above embodiments, the projection points corresponding to the eight corner points of each mesh in the envelope mesh group, i.e., the second envelope mesh group TriGrid, of the to-be-fused curved surface and a distance between each corner point and the valid projection point are obtained. Among all the first distances between the corner point and several projection points of the corner point, a shortest distance is determined as the TSDF distance in the first TSDF value of the corner point.

It should be noted that, a color value of the projection point of each corner point of each cube in the envelope mesh group of the to-be-fused curved surface may be an average value of colors of three vertices of the triangular mesh corresponding to the projection point, and normal coordinates of the projection are given by a unit normal of the triangle. The color value and the normal can be determined as a color value and a normal of the corner point.

Throughout the entire process, there may be very few corner points on the to-be-fused curved surface that do not have any valid projection point. In an embodiment of the present disclosure, when a corner point that has no projection point to all the triangular meshes on the to-be-fused curved surface exists, a projection point of an adjacent corner point to the corner point may be determined as the projection point of the corner point.

Specifically, the entire spatial mesh group TotalGrid is used to envelope each triangular mesh of the to-be-fused curved surface to obtain the envelope mesh group, i.e., the second envelope mesh group TriGrid. For the corner point p(x, y, z) which has no valid projection point in the region, projection points of the corner point p(x, y, z) are replaced with projection points of adjacent corner points (p1(x-Δ, y, z), p2(x+Δ, y, z), p3(x, y-Δ, z), p4(x, y+Δ, z), p5(x, y, z-Δ), and p6(x, y, z+Δ), where Δ represents a side length of the mesh).

At S2, a second TSDF value of each corner point corresponding to a target curved surface is obtained.

Specifically, the entire fusion process is accomplished in a fixed world coordinate system, i.e., the defined entire spatial mesh group TotalGrid (i.e., the above-mentioned base grid), which is composed of many small meshes (i.e., cubes) having equal side lengths.

For example, the method is applied to the intraoral digital impression machine. The target curved surface in the world coordinate system is a total curved surface TotalSurface, i.e., the surface obtained after each fusion. A new to-be-fused curved surface is obtained during scanning. The to-be-fused curved surface is a current curved surface CurrentSurface. The to-be-fused curved surface needs to be fused to the total curved surface to generate a new total curved surface. In this way, scanning and imaging of teeth are realized.

The second TSDF value of each corner point corresponding to the target curved surface has been stored after a previous fusion is completed, and can be used directly in a current curved-surface fusion.

At S3, a third TSDF value of each corner point corresponding to a fused curved surface is determined based on the first TSDF value and the second TSDF value.

Specifically, subsequent to obtaining the first TSDF value of each corner point of the to-be-fused curved surface and the second TSDF value of the target curved surface in accordance with the method described above, the third TSDF value of each corner point corresponding to the fused surface can be obtained based on the first TSDF value and the second TSDF value.

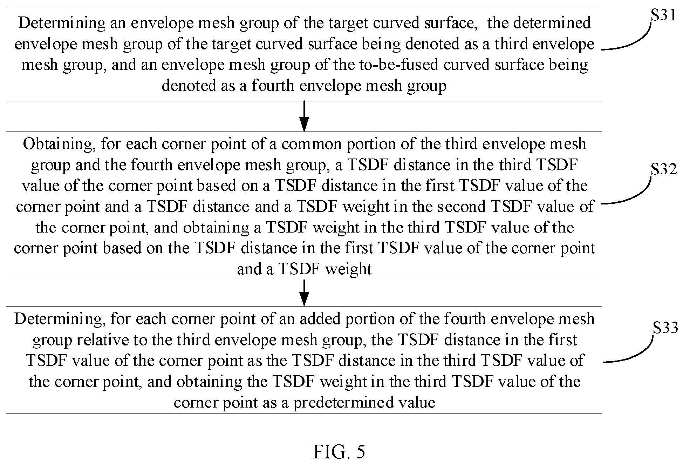

In an embodiment of the present disclosure, as illustrated in FIG. 5, determining the third TSDF value of each corner point corresponding to the fused curved surface based on the first TSDF value and the second TSDF value may include operations at blocks.

At S31, an envelope mesh group of the target curved surface is determined, the determined envelope mesh group of the target curved surface is denoted as a third envelope mesh group, and an envelope mesh group of the to-be-fused curved surface is denoted as a fourth envelope mesh group.

Specifically, the target curved surface may be the fused curved surface, which can be denoted as the total curved surface TotalSurface. The entire spatial mesh group TotalGrid is used to envelope the target curved surface to obtain the envelope mesh group goalGrid of the target curved surface, which is denoted as the third envelope mesh group. The to-be-fused curved surface is the curved surface to be fused to the entirety and can be denoted as the current curved surface CurrentSurface. The entire spatial mesh group TotalGrid is used to envelope the current curved surface CurrentSurface to obtain the envelope mesh group CurSurGrid of the current curved surface, which is denoted as the fourth envelope mesh group.

At S32, for each corner point of a common portion of the third envelope mesh group and the fourth envelope mesh group (i.e., a common portion of the target curved surface and the to-be-fused curved surface), a TSDF distance in the third TSDF value of the corner point is obtained based on a TSDF distance in the first TSDF value of the corner point and a TSDF distance and a TSDF weight in the second TSDF value of the corner point, and a TSDF weight in the third TSDF value of the corner point is obtained based on the TSDF distance in the first TSDF value of the corner point and a TSDF weight.

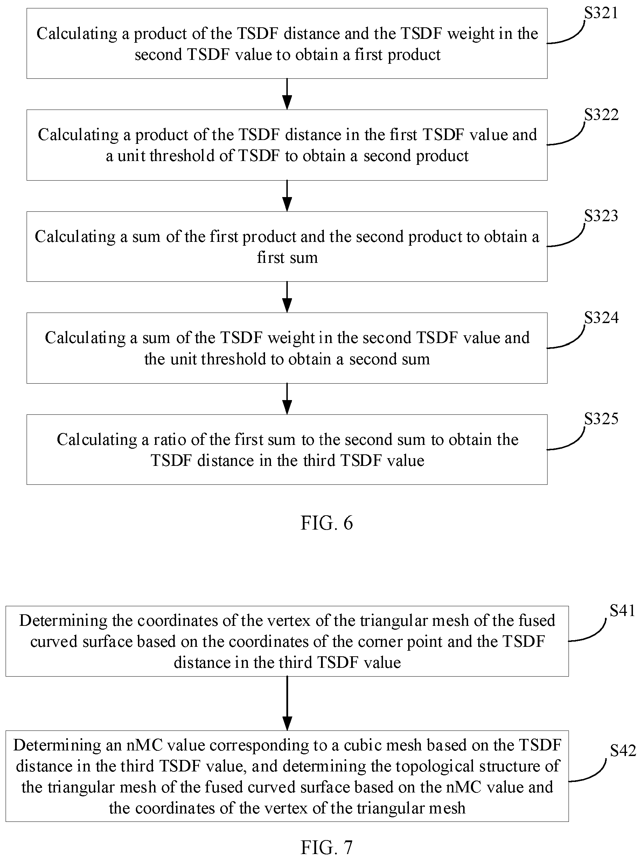

In an embodiment of the present disclosure, as illustrated in FIG. 6, obtaining the TSDF distance in the third TSDF value based on the TSDF distance in the first TSDF value and the TSDF distance and the TSDF weight in the second TSDF value may include operations at blocks.

At block S321, a product of the TSDF distance and the TSDF weight in the second TSDF value is calculated to obtain a first product.

At block S322, a product of the TSDF distance in the first TSDF value and a unit threshold of TSDF is calculated to obtain a second product.

At block S323, a sum of the first product and the second product is calculated to obtain a first sum.

At block S324, a sum of the TSDF weight in the second TSDF value and the unit threshold is calculated to obtain a second sum.

At block S425, a ratio of the first sum to the second sum is calculated to obtain the TSDF distance in the third TSDF value.

Specifically, the product of the TSDF distance fdistance2 and the TSDF weight nweight2 in the second TSDF value is calculated, and the product of the TSDF distance fmindistance in the first TSDF value and the unit threshold of the TSDF is calculated, where the unit threshold of the TSDF is 1. An initial TSDF weight nweight of each corner point is 0. The two products are summed to obtain the first sum. The sum of the TSDF weight nweight2 in the second TSDF value and the unit threshold is calculated to obtain the second sum. The ratio of the first sum to the second sum is calculated to obtain the TSDF distance fdistance in the third TSDF value. An algorithmic equation is as follows:

$$fdistance = \frac{fdistance2 * nweight2 + fmindistance * 1}{nweight2 + 1}$$

In an embodiment of the present disclosure, obtaining the TSDF weight in the third TSDF value based on the TSDF distance in the first TSDF value and the TSDF weight includes: obtaining the TSDF weight in the third TSDF value based on the TSDF weight in the second TSDF value when the TSDF distance in the first TSDF value is smaller than a predetermined truncation distance; and determining the TSDF weight in the second TSDF value as the TSDF weight in the third TSDF value when the TSDF distance in the first TSDF value is greater than or equal to the predetermined truncation distance.

Specifically, when the TSDF distance in the first TSDF value of the to-be-fused curved surface is smaller than the predetermined truncation distance, the TSDF weight in the third TSDF value is obtained by adding the unit threshold to the TSDF weight in the second TSDF value of the target curved surface. For example, *nweight = nweight* 2+1. When the TSDF distance in the first TSDF value is greater than or equal to the predetermined truncation distance, the TSDF weight in the third TSDF value is the TSDF weight in the second TSDF value of the target curved surface, i.e., *nweight = nweight*2.

At S33, for each corner point of an added portion of the fourth envelope mesh group relative to the third envelope mesh group (i.e., an added portion of the to-be-fused curved surface relative to the target curved surface), the TSDF distance in the first TSDF value of the corner point is determined as the TSDF distance in the third TSDF value of the corner point, and the TSDF weight in the third TSDF value of the corner point is obtained as a predetermined value. The predetermined value may be a unit threshold.

Specifically, for each corner point of the added portion of the fourth envelope mesh group, i.e., the envelope mesh group CurSurGrid of the to-be-fused curved surface, relative to the third envelope mesh group, i.e., the envelope mesh group goalGrid of the target curved surface, the TSDF distance fdistance in the third TSDF value of the corner point is the TSDF distance fmindistance in the first TSDF value. The TSDF weight nweight of the corner point is the predetermined threshold, which may be the unit threshold 1. An algorithmic equation is as follows:

$$fdistance = fmindistance$$

$$nweight = 1$$

The TSDF value of the fused curved surface is calculated based on the above method. For the fused curved surface, in addition to the TSDF value of the fused curved surface, the coordinates of the vertex of the triangular mesh of the fused curved surface and the topological structure of the triangular mesh need to be calculated.

If there is a remaining portion in the third envelope mesh group after the above common portion is removed, the remaining portion should still be determined based on data corresponding to an original portion of the target curved surface. That is, the second TSDF value of each corner point in the remaining portion is determined as the third TSDF value corresponding to the remaining portion, and coordinates of corresponding corner points remain unchanged.

At S4, coordinates of a vertex of a triangular mesh of the fused curved surface and a topological structure of the triangular mesh are determined based on the third TSDF value and coordinates of the corner point.

Specifically, coordinates of vertices of triangular meshes and topological structures of the triangular meshes may be calculated for the common portion and a non-common portion (i.e., the added portion) of the third envelope mesh group and the fourth envelope mesh group to obtain the coordinates of the vertex of the triangular mesh of the fused curved surface and the topological structure of the triangular mesh. In an embodiment of the present disclosure, as illustrated in FIG. 7, calculating the coordinates of the vertex of the triangular mesh of the fused curved surface and the topological structure of the triangular mesh based on the third TSDF value and the coordinates of the corner point may include operations at blocks.

At S41, the coordinates of the vertex of the triangular mesh of the fused curved surface are determined based on the coordinates of the corner point and the TSDF distance in the third TSDF value.

Specifically, for each edge of the common portion of the third envelope mesh group and the fourth envelope mesh group, if two corner points of the edge are valid (i.e., the third TSDF value exists) and identifiers of the fdistance (i.e., the TSDF distance in the third TSDF value) of the two corner points are opposite (e.g., TSDF distances of two corner points on a same edge of the cube have opposite identifiers), the edge is determined to be a valid edge. The coordinates and the color value of the vertex of the triangular mesh of the fused curved surface are calculated based on the valid edge. The equations can be as follows:

$$fx = ncorner[n_1].fx - ncorner[n_1].fdistance * \frac{ncorner[n_2].fx - ncorner[n_1].fx}{ncorner[n_2].fdistance - ncorner[n_1].fdistance}$$

$$fy = ncorner[n_1].fy - ncorner[n_1].fdistance * \frac{ncorner[n_2].fy - ncorner[n_1].fy}{ncorner[n_2].fdistance - ncorner[n_1].fdistance}$$

$$fz = ncorner[n_1].fz - ncorner[n_1].fdistance * \frac{ncorner[n_2].fz - ncorner[n_1].fz}{ncorner[n_2].fdistance - ncorner[n_1].fdistance}$$

$$nr = ncorner[n_1].nr - ncorner[n_1].fdistance * \frac{ncorner[n_2].nr - ncorner[n_1].nr}{ncorner[n_2].fdistance - ncorner[n_1].fdistance}$$

$$ng = ncorner[n_1].ng - ncorner[n_1].fdistance * \frac{ncorner[n_2].ng - ncorner[n_1].ng}{ncorner[n_2].fdistance - ncorner[n_1].fdistance}$$

$$nb = ncorner[n_1].nb - ncorner[n_1].fdistance * \frac{ncorner[n_2].nb - ncorner[n_1].nb}{ncorner[n_2].fdistance - ncorner[n_1].fdistance}$$

In the above equations, ncorner[$n_1$] and ncorner[$n_2$] represent two corner points on one edge of the cube.

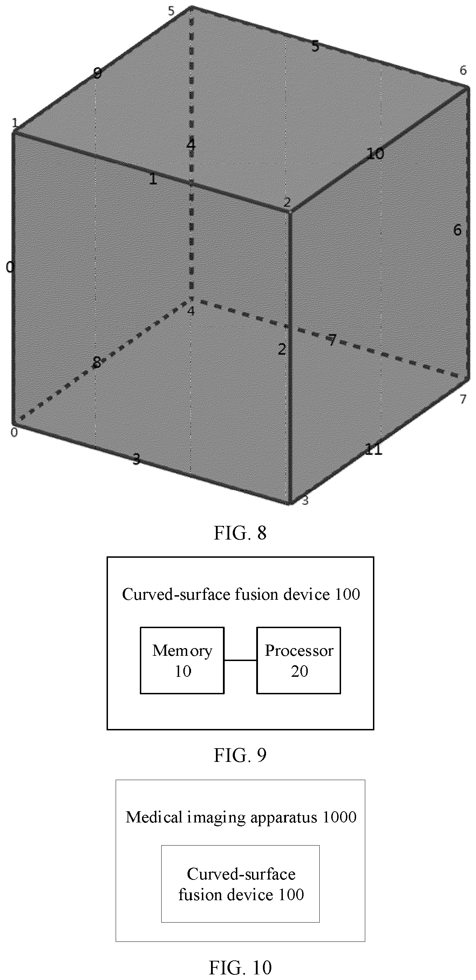

In addition, the identifier of the valid edge can be stored in nedge[]. Corresponding identifiers of edges and corner points can be arranged as illustrated in FIG. 8.

For each edge in the added portion of the fourth envelope mesh group relative to the third envelope mesh group, a determination of the valid edge and a calculation of the coordinates and the color value of the vertex of the triangular mesh are the same as those in the common portion mentioned above. A difference lies in that identifiers ncorner[2] of the two corner points of the valid edge also need to be stored, in such a manner that the identifiers of the valid edge can be written into corresponding nedge[].

At S42, an nMC value corresponding to a cubic mesh is determined based on the TSDF distance in the third TSDF value, and the topological structure of the triangular mesh of the fused curved surface is determined based on the nMC value and the coordinates of the vertex of the triangular mesh.

Specifically, for each mesh of the common portion of the third envelope mesh group and the fourth envelope mesh group, nMC of the mesh is obtained when all the eight corner points of the mesh are valid.

For example, nMC is initially set to 0. When the fdistance of a 1-st corner point ncorner[0] is smaller than 0, nMC| =1. When the fdistance (i.e., the TSDF distance in the third TSDF value) of a 2-nd corner point ncorner[1] is smaller than 0, nMC|=2. When the fdistance of a 3-rd corner point ncorner[2] is smaller than 0, nMC|=4. When the fdistance of a 4-th corner point ncorner[3] is smaller than 0, nMC|=8. When the fdistance of a 5-th corner point ncorner[4] is smaller than 0, nMC|=16. When the fdistance of a 6-th corner point ncorner[5] is smaller than 0, nMC|=32. When the fdistance of the 7-th corner point ncorner[6] is smaller than 0, nMC|=64. When the fdistance of an 8-th corner point ncorner[7] is smaller than 0, nMC|=128. Since values of the nMC range from 0 to 255, the mesh is valid, i.e., corresponding to rows in an MC lookup table.

For each mesh of the added portion of the third envelope mesh group relative to the fourth envelope mesh group, a processing method is similar to that of the common portion mentioned above, with a difference being that identifiers ncorner [8] of eight corner points of the added portion also need to be stored.

It should be noted that each mesh in this step can be computed in parallel using CUDA. Coordinates of each mesh can be obtained directly based on a quantity and a position of the mesh, i.e., integer multiples of the edge length. The color value of each mesh is a color value of a corresponding point of the mesh.

At S5, the fused curved surface is determined based on the coordinates of the vertex of the triangular mesh of the fused curved surface and the topological structure of the triangular mesh.

Specifically, the vertex of the triangular mesh and the topological structure of the triangular mesh can be represented by the following stored information: corner point identifiers, TSDF values, and coordinates; identifiers of eight corner points corresponding to the cube, corresponding nMC values, corresponding edge identifiers, and an attribute of the cube; and identifiers of two corner points corresponding to the edge, coordinates of the vertex of the corresponding triangular mesh, and an attribute of the edge. The attribute of the cube and the attribute of the edge both indicate whether there exists a corresponding triangular mesh.

Further, determining the fused curved surface based on the coordinates of the vertex of the triangular mesh of the fused curved surface and the topological structure of the triangular mesh includes: determining, based on the attribute of the edge, coordinates of vertices of a corresponding triangular mesh on an edge that has the corresponding triangular mesh, finding a cube corresponding to the triangular mesh based on the attribute of the cube, finding an index row number of the mesh through the nMC value corresponding to the cube, finding, based on an edge identifier of a row indicated by the index row number, edges corresponding to three vertices of each triangular mesh in the cube using the edge identifier of the row, and matching the edges with the vertices obtained at a beginning. That is, edges of the cube where the three vertices of each triangular mesh are located and coordinates of the three vertices are determined, and thus each triangular mesh is determined. As a result, a corresponding three-dimensional curved surface composed of individual triangular meshes can be obtained.

In this embodiment, the index table of MC curved-surface vertex identifiers used above (since the table belongs to the related art, specific contents of the index table are omitted) has a total of 256 rows. That is, there are 256 types of meshes (since a 1-st row and a last row are identical, there are in fact 255 types of meshes. A division into 256 types of meshes is for a purpose of fast computation of 2 raised to the power of N). Each row contains 16 identifiers (since there are at most five triangular meshes in a single MC mesh, there are 5*3=15 edge identifiers of vertices of the triangular mesh, and thus maximum valid edge identifiers are the first 15 edge identifiers. A last identifier is -1. A division into 16 identifiers is for fast computation of 2 raised to the power of N). Since one triangular mesh has at most 12 edges, the identifiers are 0, 1, 2, ..., 11, and an identifier of -1 indicates invalidity.

With the above method, the three-dimensional fused curved surface can be determined based on the vertex of the triangular mesh of the fused curved surface and the topological structure of the triangular mesh.

With the curved-surface fusion method according to the embodiments of the present disclosure, the first TSDF value of the to-be-fused curved surface is calculated using a TSDF algorithm. The second TSDF value of the fused surface is obtained. The third TSDF value of each corner point corresponding to the fused curved surface is calculated based on the first TSDF value and the second TSDF value. By replacing voxel positions with corner point positions, a computational load for the curved-surface fusion is reduced. In addition, the coordinates of the vertex of the triangular mesh of the fused curved surface and the topological structure of the triangular mesh are calculated based on the third TSDF value, the coordinates of the corner point, the coordinates of the vertex of the triangular mesh of the target curved surface, and the topological structure of the triangular mesh, in such a manner that the fused curved surface is determined. The vertex of the triangular mesh and the topological structure of the triangular mesh can be stored incrementally. That is, several registrations and fusions can be performed without requiring several curved-surface reconstructions. Previously stored data, including the topological structure, of the curved surface remains unchanged, which is equivalent to combining the curved-surface fusion with the curved-surface reconstruction, reducing the computational load.

Based on the above-mentioned curved-surface fusion method, the present disclosure provides a curved-surface fusion device.

In an embodiment of the present disclosure, as illustrated in FIG. 9, a curved-surface fusion device 100 includes a memory 10, a processor 20, and a computer program stored on the memory 10. The computer program, when executed by the processor 20, implements the curved-surface fusion method as described above.

Based on the above-mentioned curved-surface fusion method, the present disclosure provides a medical imaging apparatus.

In an embodiment of the present disclosure, as illustrated in FIG. 10, the medical imaging apparatus 1000 includes the curved-surface fusion device 100 as described above.

With the curved-surface fusion method and device and the medical imaging apparatus according to the embodiments of the present disclosure, the first TSDF value of the to-be-fused curved surface is calculated using the TSDF algorithm. The second TSDF value of the fused surface is obtained. The third TSDF value of each corner point corresponding to the fused curved surface is calculated based on the first TSDF value and the second TSDF value. By replacing the voxel positions with the corner point positions, the computational load for the curved-surface fusion is reduced. In addition, the coordinates of the vertex of the triangular mesh of the fused curved surface and the topological structure of the triangular mesh are determined based on the third TSDF value and the coordinates of the corner point, in such a manner that the fused curved surface is determined. A calculation process of the curved-surface fusion is a process of determining the vertex of the triangular mesh of the fused curved surface and the topological structure of the triangular mesh, which is equivalent to combining the curved-surface fusion with the curved-surface reconstruction without reconstructing the curved surface separately, reducing the computational load.

It should be noted that, the logics and/or steps represented in the flowchart or described otherwise herein can be for example considered as a list of ordered executable instructions for implementing logic functions, and can be embodied in any computer-readable medium that is to be used by or used with an instruction execution system, apparatus, or device (such as a computer-based system, a system including a processor, or any other system that can retrieve and execute instructions from an instruction execution system, apparatus, or device). For the present disclosure, a "computer-readable medium" can be any apparatus that can contain, store, communicate, propagate, or transmit a program to be used by or used with an instruction execution system, apparatus, or device. More specific examples of computer-readable mediums include, as a non-exhaustive list: an electrical connector (electronic device) with one or more wirings, a portable computer disk case (magnetic devices), a Random Access Memory (RAM), a Read Only Memory (ROM), an Erasable Programmable Read Only Memory (EPROM or flash memory), a fiber optic device, and a portable Compact Disk Read Only memory (CDROM). In addition, the computer-readable medium may even be paper or other suitable medium on which the program can be printed, as the program can be obtained electronically, e.g., by optically scanning the paper or the other medium, and then editing, interpreting, or otherwise processing the scanning result when necessary, and then stored in a computer memory.

It should be understood that each part of the present disclosure may be realized by hardware, software, firmware, or a combination thereof. In the above embodiments, multiple steps or methods may be realized by software or firmware stored in the memory and executed by an appropriate instruction execution system. For example, when it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a Programmable Gate Array (PGA), a Field Programmable Gate Array (FPGA), etc.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples.

In the description of the present disclosure, it should be understood that, the orientation or the position indicated by technical terms such as "center", "longitudinal", "transverse", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation or the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation of the present disclosure.

In addition, terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, such as two or three, unless otherwise specifically defined.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Although embodiments of the present disclosure have been shown and described above, it should be understood that above embodiments are merely exemplary, and cannot be construed to limit the present disclosure. For those skilled in the art, changes, modifications, alternatives, and variants can be made to the embodiments without departing from the scope of the present disclosure.

## Claims

1. A curved-surface fusion method, comprising:

   calculating a first TSDF value of each corner point corresponding to a to-be-fused curved surface;
   obtaining a second TSDF value of each corner point corresponding to a target curved surface;
   determining a third TSDF value of each corner point corresponding to a fused curved surface based on the first TSDF value and the second TSDF value;
   determining coordinates of a vertex of a triangular mesh of the fused curved surface and a topological structure of the triangular mesh based on the third TSDF value of the corner point and coordinates of the corner point; and
   determining the fused curved surface based on the coordinates of the vertex of the triangular mesh of the fused curved surface and the topological structure of the triangular mesh.

2. The curved-surface fusion method according to claim 1, wherein said calculating the first TSDF value of each corner point corresponding to the to-be-fused curved surface comprises:

determining an envelope mesh group of the to-be-fused curved surface, and calculating, for each corner point in the envelope mesh group, a minimum distance from the corner point to all triangular meshes on the to-be-fused curved surface; and

determining the minimum distance as a TSDF distance in the first TSDF value of each corner point corresponding to the to-be-fused curved surface.

3. The curved-surface fusion method according to claim 2, wherein said determining the envelope mesh group of the to-be-fused curved surface, and calculating, for each corner point in the envelope mesh group, the minimum distance from the corner point to all the triangular meshes on the to-be-fused curved surface comprises:

determining, for all the triangular meshes on the to-be-fused curved surface, an envelope mesh group that envelopes all the triangular meshes, the determined envelope mesh group being denoted as a first envelope mesh group, the first envelope mesh group being the envelope mesh group of the to-be-fused curved surface;

determining, for each corner point of each cube in the first envelope mesh group, projection points of the corner point to all the triangular meshes on the to-be-fused curved surface, and calculating a first distance from the corner point to each of the projection points of the corner point; and

determining a minimum distance among the first distances of each corner point as the minimum distance from the corner point to all the triangular meshes on the to-be-fused curved surface;

or

determining, for each triangular mesh on the to-be-fused curved surface, an envelope mesh group that envelopes the triangular mesh, the determined envelope mesh group being denoted as a second envelope mesh group, all second envelope mesh groups constituting the envelope mesh group of the to-be-fused curved surface;

determining, for each corner point of each cube in each second envelope mesh group, projection points of the corner point to corresponding triangular meshes, and calculating a first distance from the corner point to each of the projection points of the corner point; and

determining a minimum distance among the first distances corresponding to a same corner point as a minimum distance from the same corner point to all the triangular meshes on the to-be-fused curved surface, wherein each of the projection points used to calculate the first distance falls within a corresponding triangular mesh.

4. The curved-surface fusion method according to claim 3, wherein a way of determining the projection points comprises at least one of the following:

way 1: obtaining, for each corner point, projection points of the corner point to all the triangular meshes on the to-be-fused curved surface using a center-of-gravity method and a vertical vector method;

way 2: determining, for each mesh corresponding to the to-be-fused curved surface, an intersection of a line connecting centers of opposite faces of the mesh with a corresponding one of all the triangular meshes on the to-be-fused curved surface, and determining the intersection as a projection point of eight corner points of the mesh to the corresponding one of all the triangular meshes on the to-be-fused curved surface; and

way 3: determining, for each triangular mesh on the to-be-fused curved surface, an intersection of a mesh face of an envelope mesh group of the triangular mesh with the triangular mesh, and determining the intersection as a projection point of eight corner points of each mesh in the envelope mesh group of the triangular mesh to the triangular mesh.

5. The curved-surface fusion method according to claim 3 or 4, wherein when a corner point that has no projection point to all the triangular meshes on the to-be-fused curved surface exists, a projection point of an adjacent corner point to the corner point is determined as the projection point of the corner point.

6. The curved-surface fusion method according to any one of claims 1 to 5, wherein said determining the third TSDF value of each corner point corresponding to the fused curved surface based on the first TSDF value and the second TSDF value comprises:

determining an envelope mesh group of the target curved surface, the determined envelope mesh group of the target curved surface being denoted as a third envelope mesh group, and an envelope mesh group of the to-be-fused curved surface being denoted as a fourth envelope mesh group;

obtaining, for each corner point of a common portion of the third envelope mesh group and the fourth envelope mesh group, a TSDF distance in the third TSDF value of the corner point based on a TSDF distance in the first TSDF value of the corner point and a TSDF distance and a TSDF weight in the second TSDF value of the corner point, and obtaining a TSDF weight in the third TSDF value of the corner point based on the TSDF distance in the first TSDF value of the corner point and a TSDF weight; and

determining, for each corner point of an added portion of the fourth envelope mesh group relative to the third envelope mesh group, the first TSDF value of the corner point as the TSDF distance in the third TSDF value of the corner point, and obtaining the TSDF weight in the third TSDF value of the corner point as a predetermined value.

7. The curved-surface fusion method according to claim 6, wherein said obtaining the TSDF weight in the third TSDF value based on the TSDF distance in the first TSDF value and the TSDF weight comprises:

obtaining the TSDF weight in the third TSDF value based on the TSDF weight in the second TSDF value when the TSDF distance in the first TSDF value is smaller than a predetermined truncation distance; and

determining the TSDF weight in the second TSDF value as the TSDF weight in the third TSDF value when the TSDF distance in the first TSDF value is greater than or equal to the predetermined truncation distance.

8. The curved-surface fusion method according to claim 7, wherein:

said obtaining the TSDF distance in the third TSDF value based on the TSDF distance in the first TSDF value and the TSDF distance and the TSDF weight in the second TSDF value comprises:

calculating a product of the TSDF distance and the TSDF weight in the second TSDF value to obtain a first product;

calculating a product of the TSDF distance in the first TSDF value and a unit threshold of TSDF to obtain a second product;

calculating a sum of the first product and the second product to obtain a first sum;

calculating a sum of the TSDF weight in the second TSDF value and the unit threshold to obtain a second sum; and

calculating a ratio of the first sum to the second sum to obtain the TSDF distance in the third TSDF value; and

said obtaining the TSDF weight in the third TSDF value based on the TSDF weight in the second TSDF value comprises:

determining the second sum as the TSDF weight in the third TSDF value.

9. The curved-surface fusion method according to any one of claims 6 to 8, wherein said determining the coordinates of the vertex of the triangular mesh of the fused curved surface and the topological structure of the triangular mesh based on the third TSDF value of the corner point and the coordinates of the corner point comprises:

determining the coordinates of the vertex of the triangular mesh of the fused curved surface based on the coordinates of the corner point and the TSDF distance in the third TSDF value; and

determining an nMC value corresponding to a cubic mesh based on the TSDF distance in the third TSDF value, and determining the topological structure of the triangular mesh of the fused curved surface based on the nMC value and the coordinates of the vertex of the triangular mesh.

10. A curved-surface fusion device, comprising:

a memory;

a processor; and

a computer program stored on the memory, wherein the computer program, when executed by the processor, implements the curved-surface fusion method according to any one of claims 1 to 9.

11. A medical imaging apparatus, comprising the curved-surface fusion device according to claim 10.

Calculating a first TSDF value of each corner point corresponding to a to-be-fused curved surface — S1

Obtaining a second TSDF value of each corner point corresponding to a target curved surface — S2

Determining a third TSDF value of each corner point corresponding to a fused curved surface based on the first TSDF value and the second TSDF value — S3

Determining coordinates of a vertex of a triangular mesh of the fused curved surface and a topological structure of the triangular mesh based on the third TSDF value of the corner point and coordinates of the corner point — S4

Determining the fused curved surface based on the coordinates of the vertex of the triangular mesh of the fused curved surface and the topological structure of the triangular mesh — S5

FIG. 1

Determining an envelope mesh group of the to-be-fused curved surface — S11

Calculating, for each corner point in the envelope mesh group, a minimum distance from the corner point to all triangular meshes on the to-be-fused curved surface — S12

Determining the minimum distance as a TSDF distance in the first TSDF value of each corner point corresponding to the to-be-fused curved surface — S13

FIG. 2

Determining, for all the triangular meshes on the to-be-fused curved surface, an envelope mesh group that envelopes all the triangular meshes, the determined envelope mesh group being denoted as a first envelope mesh group, the first envelope mesh group being the envelope mesh group of the to-be-fused curved surface ⟋ S121(a)

Determining, for each corner point of each cube in the first envelope mesh group, projection points of the corner point to all the triangular meshes on the to-be-fused curved surface, and calculating a first distance from the corner point to each of the projection points of the corner point ⟋ S122(a)

Determining a minimum distance among the first distances of each corner point as the minimum distance from the corner point to all the triangular meshes on the to-be-fused curved surface ⟋ S123(a)

FIG. 3(a)

Determining, for each triangular mesh on the to-be-fused curved surface, an envelope mesh group that envelopes the triangular mesh, the determined envelope mesh group being denoted as a second envelope mesh group, all second envelope mesh groups constituting the envelope mesh group of the to-be-fused curved surface ⟋ S121(b)

Determining, for each corner point of each cube in each second envelope mesh group, projection points of the corner point to corresponding triangular meshes, and calculating a first distance from the corner point to each of the projection points of the corner point ⟋ S122(b)

Determining a minimum distance among the first distances corresponding to a same corner point as a minimum distance from the same corner point to all the triangular meshes on the to-be-fused curved surface ⟋ S123(b)

FIG. 3(b)

FIG. 4(a)

FIG. 4(b)

Determining an envelope mesh group of the target curved surface, the determined envelope mesh group of the target curved surface being denoted as a third envelope mesh group, and an envelope mesh group of the to-be-fused curved surface being denoted as a fourth envelope mesh group

S31

Obtaining, for each corner point of a common portion of the third envelope mesh group and the fourth envelope mesh group, a TSDF distance in the third TSDF value of the corner point based on a TSDF distance in the first TSDF value of the corner point and a TSDF distance and a TSDF weight in the second TSDF value of the corner point, and obtaining a TSDF weight in the third TSDF value of the corner point based on the TSDF distance in the first TSDF value of the corner point and a TSDF weight

S32

Determining, for each corner point of an added portion of the fourth envelope mesh group relative to the third envelope mesh group, the TSDF distance in the first TSDF value of the corner point as the TSDF distance in the third TSDF value of the corner point, and obtaining the TSDF weight in the third TSDF value of the corner point as a predetermined value

S33

FIG. 5

Calculating a product of the TSDF distance and the TSDF weight in the second TSDF value to obtain a first product $\quad$ S321

$\downarrow$

Calculating a product of the TSDF distance in the first TSDF value and a unit threshold of TSDF to obtain a second product $\quad$ S322

$\downarrow$

Calculating a sum of the first product and the second product to obtain a first sum $\quad$ S323

$\downarrow$

Calculating a sum of the TSDF weight in the second TSDF value and the unit threshold to obtain a second sum $\quad$ S324

$\downarrow$

Calculating a ratio of the first sum to the second sum to obtain the TSDF distance in the third TSDF value $\quad$ S325

FIG. 6

Determining the coordinates of the vertex of the triangular mesh of the fused curved surface based on the coordinates of the corner point and the TSDF distance in the third TSDF value $\quad$ S41

$\downarrow$

Determining an nMC value corresponding to a cubic mesh based on the TSDF distance in the third TSDF value, and determining the topological structure of the triangular mesh of the fused curved surface based on the nMC value and the coordinates of the vertex of the triangular mesh $\quad$ S42

FIG. 7

FIG. 8

Curved-surface fusion device 100

Memory 10 — Processor 20

FIG. 9

Medical imaging apparatus 1000

Curved-surface fusion device 100

FIG. 10

## INTERNATIONAL SEARCH REPORT

| International application No. |
|---|
| **PCT/CN2023/115899** |

**A. CLASSIFICATION OF SUBJECT MATTER**

G06T 17/20(2006.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNTXT, CNKI, ENTXT, IEEE: 曲面融合, 角点, 截断符号距离函数, 三角网格, 三角面片, 顶点, 坐标, 拓扑, surface merge, feature point, TSDF, triangle mesh, vertex, coordinate, topology

**C. DOCUMENTS CONSIDERED TO BE RELEVANT**

| Category* | Citation of document, with indication, where appropriate, of the relevant passages | Relevant to claim No. |
|---|---|---|
| A | CN 114782628 A (XI'AN UNIVERSITY OF TECHNOLOGY) 22 July 2022 (2022-07-22) description, pages 6-11 | 1-11 |
| A | CN 109903372 A (INSTITUTE OF AUTOMATION, CHINESE ACADEMY OF SCIENCES) 18 June 2019 (2019-06-18) entire document | 1-11 |
| A | US 2013083019 A1 (HON HAI PRECISION INDUSTRY CO., LTD. et al.) 04 April 2013 (2013-04-04) entire document | 1-11 |
| A | US 2015178908 A1 (A.TRON3D GMBH) 25 June 2015 (2015-06-25) entire document | 1-11 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 232020** | **22 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/115899**

| Patent document cited in search report | | | Publication date (day/month/year) | Patent family member(s) | | | Publication date (day/month/year) |
|---|---|---|---|---|---|---|---|
| CN | 114782628 | A | 22 July 2022 | None | | | |
| CN | 109903372 | A | 18 June 2019 | None | | | |
| US | 2013083019 | A1 | 04 April 2013 | TW | 201314176 | A | 01 April 2013 |
| | | | | CN | 103034743 | A | 10 April 2013 |
| US | 2015178908 | A1 | 25 June 2015 | EP | 2886043 | A1 | 24 June 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211212199